Europäisches Patentamt

European Patent Office

Office européen des brevets

(19)

(11) **EP 1 256 882 A1**

(12) ## DEMANDE DE BREVET EUROPEEN

(43) Date de publication:
**13.11.2002 Bulletin 2002/46**

(51) Int Cl.⁷: **G06F 17/21**

(21) Numéro de dépôt: **01401177.9**

(22) Date de dépôt: **09.05.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(71) Demandeur: **E-Sual**
**75116 Paris (FR)**

(72) Inventeur: **Poullain, Eric**
**98000 Monaco (MC) (MC)**

(74) Mandataire: **Callon de Lamarck, Jean-Robert et al Cabinet Régimbeau
20, rue de Chazelles
75847 Paris cedex 17 (FR)**

(54) **Procédé d'affichage d'éléments textuels à l'identique sur des postes clients**

(57) Le procédé d'affichage sur un poste client d'un document transmis par un poste serveur et comportant des éléments textuels, comprend les étapes suivantes :

- mémoriser dans le poste serveur un fichier de police source comprenant une cartographie binaire d'un ensemble prédéterminé de caractères aptes à constituer les éléments textuels,
- au niveau du poste serveur, préparer le document contenant les éléments textuels, l'aspect des éléments textuels dans le document étant obtenu par des références aux caractères correspondants dans le fichier de police source,
- transmettre au poste client le document,
- mémoriser dans le poste client un fichier de police local identique au fichier de police source, et
- au niveau du poste client, utiliser les références en combinaison avec le fichier de police local pour reconstituer fidèlement l'aspect des éléments textuels.

FIG.2

**Description**

L'invention concerne les procédés d'affichage reproductible d'éléments textuels transmis par un réseau reliant un ou plusieurs postes clients à un ou plusieurs postes serveurs.

Par exemple, dans le contexte de l'Internet, les différents postes clients connectés à un tel réseau sont par nature hétérogènes. Cette hétérogénéité est d'ordre matériel (ordinateur personnel ou PC (personnel computer), MacIntosh™ d'Apple™, station de travail), d'une part, et, d'autre part, d'ordre logiciel (système d'exploitation de type Windows™, MacOS™, Linux, Unix, etc...).

Du fait de cette hétérogénéité, la représentation graphique d'une chaîne de caractères sur une page de type HTML (HyperText Markup Language ou langage de marquage pour hypertexte) s'effectue généralement avec une ou plusieurs substitutions de familles de polices de caractères en une autre. Ainsi, la page n'apparaît pas à l'identique pour les divers postes clients connectés.

La solution serait de fournir avec la page HTML le ou les fichiers de polices de caractères utilisés dans cette page. Mais la taille de ce type de fichiers (de l'ordre de 200 kilo-octets en moyenne) rend cette solution incompatible avec la bande passante du réseau sauf à avoir des temps de latence totalement excessifs. De plus, il faudrait réaliser une installation du ou des fichiers de polices de caractères sur le poste client, ce qui nécessite une intrusion sur le dit poste client. Une telle installation nécessite de plus un temps non négligeable pour s'accomplir. D'autre part, la représentation d'une chaîne de caractères avec un tel fichier de polices nécessite l'utilisation d'un moteur graphique particulier qui n'est pas systématiquement présent sur le poste client selon le système d'exploitation utilisé sur ce dit poste client. De plus, l'installation d'un tel moteur graphique présuppose que l'utilisateur du poste client accepte cette installation, ce qui n'est absolument pas garanti. D'autres approches demandent un travail supplémentaire au concepteur de la page HTML, ce qui entraîne des coûts non négligeables de conception, de réalisation et de maintenance.

Un but de l'invention est de fournir un procédé d'affichage d'éléments textuels sur un poste client de manière reproductible indépendamment de la configuration locale du poste client et indépendamment d'une architecture client/ serveur.

Pour cela, on prévoit, selon l'invention, un procédé d'affichage sur un poste client d'un document transmis par un poste serveur et comportant des éléments textuels, caractérisé en ce qu'il comprend les étapes suivantes :

- mémoriser dans le poste serveur un fichier de police source comprenant une cartographie binaire d'un ensemble prédéterminé de caractères aptes à constituer les éléments textuels,
- au niveau du poste serveur, préparer le document contenant les éléments textuels, l'aspect des éléments textuels dans le document étant obtenu par des références aux caractères correspondants dans le fichier de police source,
- transmettre au poste client le document,
- mémoriser dans le poste client un fichier de police local identique au fichier de police source, et
- au niveau du poste client, utiliser les références en combinaison avec le fichier de police local pour reconstituer fidèlement l'aspect des éléments textuels.

Ainsi, la forme des caractères constituant les éléments textuels est transmise au poste client qui peut alors les afficher à l'identique sur ses moyens d'affichages.

Avantageusement, mais facultativement, le procédé présente une des caractéristiques additionnelles suivantes :

* l'étape de mémorisation dans le poste client d'un fichier de police local, comporte des sous-étapes suivantes si le fichier de police local n'est pas présent sur le poste client :

  • requête par le poste client d'une copie du fichier de police source au poste serveur ;
  • transmission par le poste serveur au poste client d'une copie du fichier de police source ; et,
  • réception par le poste client de la copie du fichier de police source comme fichier de police local ;

* le fichier de police source, une fois constitué, est compressé en vue de sa transmission ;
* le fichier de police source est créé par des étapes suivantes :

  - appel du dessin du caractère engendré par un système d'exploitation du poste serveur ;
  - dessin du caractère dans une mémoire organisée de manière bidimensionnelle du poste serveur ;
  - lecture dans la mémoire bidimensionnelle de chaque point du dessin du caractère formant la cartographie binaire du caractère ;
  - concaténation des valeurs de chaque point du dessin dans une mémoire tampon du poste serveur ; et,
  - mémorisation des concaténations à partir de la mémoire tampon dans le fichier de police source.

* préalablement à l'appel du dessin du caractère, on effectue une mise à zéro de la mémoire bidimensionnelle dans lequel on va dessiner le caractère ;
* le procédé présente une étape préliminaire d'allocation d'une mémoire organisée de manière bidimensionnelle pour représenter tous les caractères de la police de caractères ;
* lors de l'utilisation des références en combinaison avec le fichier de police local pour reconstituer fidèlement l'aspect des éléments textuels :

    - pour chaque caractère à afficher des éléments textuels, on lit dans le fichier de police local la cartographie binaire du caractère donnant les valeurs des points du caractère ;
    - on dessine sur des moyens d'affichage du poste client le caractère à partir des valeurs des points lus dans le fichier de police local ;

* le document comprend une routine apte à mettre en oeuvre l'étape d'utilisation des références en combinaison avec le fichier de police local pour reconstituer fidèlement l'aspect des éléments textuels.

On propose aussi, selon l'invention, un procédé de génération sur un poste serveur d'un document apte à être transmis et comportant des éléments textuels, caractérisé en ce qu'il comprend les étapes suivantes :

- mémoriser dans le poste serveur un fichier de police source comprenant une cartographie binaire d'un ensemble prédéterminé de caractères aptes à constituer les éléments textuels,
- préparer le document contenant les éléments textuels, l'aspect des éléments textuels dans le document étant obtenu par des références aux caractères correspondants dans le fichier de police source,
- transmettre à un poste client le document, et
- mettre à disposition le fichier de police source.

Avantageusement, mais facultativement, le procédé présente une des caractéristiques additionnelles suivantes :

* le fichier de police source, une fois constitué, est compressé en vue de sa transmission ;
* le fichier de police source est créé par des étapes suivantes :

    - appel du dessin du caractère engendré par un système d'exploitation du poste serveur ;
    - dessin du caractère dans une mémoire organisée de manière bidimensionnelle du poste serveur ;
    - lecture dans la mémoire bidimensionnelle de chaque point du dessin du caractère formant la cartographie binaire du caractère ;
    - concaténation des valeurs de chaque point du dessin dans une mémoire tampon du poste serveur ; et,
    - mémorisation des concaténations à partir de la mémoire tampon dans le fichier de police source.

* préalablement à l'appel du dessin du caractère, on effectue une mise à zéro de la mémoire bidimensionnelle dans lequel on va dessiner le caractère.
* le procédé présente une étape préliminaire d'allocation d'une mémoire organisée de manière bidimensionnelle pour représenter tous les caractères de la police de caractères.

On propose aussi, selon l'invention, un procédé d'affichage sur un poste client d'un document transmis par un poste serveur et comportant des éléments textuels, caractérisé en ce qu'il comprend les étapes suivantes :

- réception du document transmis,
- mémoriser dans le poste client un fichier de police local identique au fichier de police source, et
- utiliser les références en combinaison avec le fichier de police local pour reconstituer fidèlement l'aspect des éléments textuels.

Avantageusement, mais facultativement, le procédé présente une des caractéristiques additionnelles suivantes :

* l'étape de mémorisation dans le poste client d'un fichier police local, comporte des sous-étapes suivantes si le fichier de police local n'est pas présent sur le poste client :

    • Requête par le poste client d'une copie du fichier de police source au poste serveur ;

- • transmission par le poste serveur au poste client d'une copie du fichier de police source ; et,
- • réception par le poste client de la copie du fichier de police source comme fichier de police local.

* lors de l'utilisation des références en combinaison avec le fichier de police local pour reconstituer fidèlement l'aspect des éléments textuels :

- - pour chaque caractère à afficher des éléments textuels, on lit dans le fichier de police local la cartographie binaire du caractère donnant les valeurs des points du caractère ;
- - on dessine sur des moyens d'affichage du poste client le caractère à partir des valeurs des points lus dans le fichier de police local.

* le document comprend une routine apte à mettre en oeuvre l'étape d'utilisation des références en combinaison avec le fichier de police local pour reconstituer fidèlement l'aspect des éléments textuels.

On prévoit en outre, selon l'invention, un réseau d'ordinateurs comportant au moins un poste serveur et au moins un poste client, caractérisé en ce qu'il comporte des moyens aptes à mettre en oeuvre le procédé présentant au moins l'un des caractéristiques précitées.

On prévoit aussi, selon l'invention, un poste serveur connecté à un réseau d'ordinateurs caractérisé en ce qu'il comporte des moyens aptes à mettre en oeuvre le procédé présentant au moins l'un des caractéristiques précitées.

On prévoit en outre, selon l'invention, un poste client connecté à un réseau d'ordinateurs caractérisé en ce qu'il comporte des moyens aptes à mettre en oeuvre le procédé présentant au moins l'un des caractéristiques précitées.

D'autres caractéristiques et avantages de l'invention apparaîtront dans la description ci-après d'un mode de réalisation préféré de l'invention. Aux dessins annexés :

- - la figure 1 est un schéma représentant la structure d'un réseau informatique ;
- - la figure 2 est une représentation point par point d'un caractère d'une police de caractères.

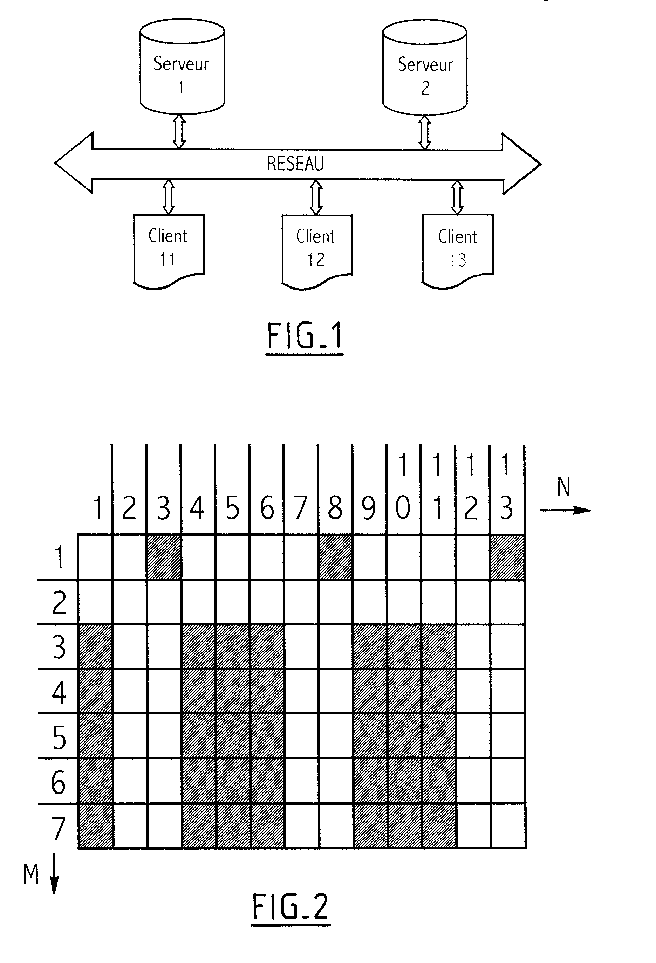

L'invention s'applique dans l'environnement d'un réseau tel qu'illustré à la figure 1. Le réseau comporte un ou plusieurs postes client 11, 12, 13, reliés à un ou plusieurs postes serveur 1, 2, selon un réseau informatique de type intranet, extranet, ou encore internet.

DEFINITIONS :

Familles : la famille de police de caractères désigne la silhouette générique des différents caractères de la police, comme par exemple *Arial* ou *Times.*

Tailles : la taille de la police est généralement comptée en nombre de points (pixels à l'écran) pour le caractère *m.* Par exemple, une police de taille 10 indique que la hauteur du caractère m est de 10 points.

D'autres mesures sont cependant possibles.

Style : une police de caractères peut de décliner en plusieurs styles : les styles les plus courants sont *plain* (normal), *bold* (gras), *italic* (italique). A noter que la notion de *bold* est représentable par un nombre de 1 à 1000 par exemple. Plus le nombre est élevé, plus les caractères apparaissent appuyés.

La première étape de l'invention s'effectue sur un poste serveur. Cette première étape concerne l'extraction et la génération d'un ou plusieurs caractères à partir d'une police de caractères pour une famille donnée, une taille donnée et un style donné. L'extraction consiste à charger dans un environnement graphique la famille, la taille et le style désirés d'une police de caractères donnée. L'environnement graphique du serveur est déterminé par son système d'exploitation comprenant un environnement donné. Par exemple, cet environnement graphique peut être celui de Microsoft™ Windows™, MacOS™ d'Apple™, Linux, Solaris™, ou encore Java II. Chaque dessin de caractère est inscrit en mémoire au sein de l'environnement graphique de manière tour à tour, en blanc sur fond noir.

Un exemple est illustré en figure 2 pour le caractère m. L'information pour la police de caractères utilisée permet, pour chaque caractère, de connaître son encombrement horizontal et vertical. Dans l'illustration de la figure 2, le caractère m a un encombrement horizontal N égal à 13 points et un encombrement vertical M égal à 7 points. L'information de la forme de chaque caractère est considérée comme binaire, de manière préférentielle : un pixel (ou un point) est soit blanc ou allumé, soit noir ou éteint. Lorsque le point est blanc, on considère que sa valeur est égale à 1 ou vrai. De même, lorsque le point est noir, on considère que sa valeur est égale à 0 ou faux. La boucle d'extraction et de génération selon l'invention peut s'écrire comme suit :

- - allocation d'une portion de mémoire de l'environnement graphique suffisant pour pouvoir y dessiner tous les caractères d'une famille de caractères donnée, d'une taille donnée et d'un style donné ;

- sélection dans cette portion de mémoire de l'environnement graphique d'un ou plusieurs caractères désirés.
- pour chaque caractère désiré :

  - mise à zéro d'une zone de la portion de mémoire de l'environnement graphique nécessaire à la représentation du caractère ;
  - appel du dessin du caractère ;
  - dessin dans la zone du caractère ; et
  - extraction et concaténation des valeurs des points du dessin dans une mémoire tampon.

L'extraction des valeurs des points consiste à déterminer si le point est blanc (1) ou noir (0). La concaténation des valeurs de ces points consiste simplement à placer dans un même octet (soit 8 bits), les valeurs de 8 points successifs. Les différents points sont lus de gauche à droite et de haut en bas, comme cela est illustré par la numérotation des colonnes et des lignes sur la figure 2. Le caractère étant représenté par une matrice N par M, cette concaténation nécessite : *PartieEntière*

$$\left(\frac{N+7}{8}\right)$$

*\*M* octets. Dans l'exemple du caractère m illustré à la figure 2, ce caractère m occupe une matrice de 13 x 7. Ainsi, la concaténation selon l'invention de cette matrice nécessitera donc partie entière ((13+7)/8) x 7 octets, soit 14 octets dans cet exemple. L'extraction des valeurs des points et leur concaténation donneront les valeurs d'octet suivantes :

| i/j | 1 | 2 |
|-----|----------|----------|
| 1 | 11011110 | 11110XXX |
| 2 | 11111111 | 11111XXX |
| 3 | 01100011 | 00011XXX |
| 4 | 01100011 | 00011XXX |
| 5 | 01100011 | 00011XXX |
| 6 | 01100011 | 00011XXX |
| 7 | 01100011 | 00011XXX |

L'octet i=1,j=1 correspond aux points 1 à 8 de la première ligne de la matrice de m.
L'octet i=1,j=2 correspond aux points 9 à 13 de la première ligne de la matrice de *m*. Comme il n'y a pas 8 points successifs pour construire cet octet, on complète soit par des 0 soit par des 1 en lieu et place des X indiqués ci-dessus.
L'octet i=2,j=1 correspond aux points 1 à 8 de la deuxième ligne de la matrice de *m*, et ainsi de suite, pour que toute la matrice de *m* soit concaténée.
Au final, on obtient, comme concaténation, la succession de chiffres hexadécimaux, si on considère X=0 :

DE F0 FF F8 63 18 63 18 63 18 63 18 63 18

soit 14 octets.
La deuxième étape principale de l'invention est la préparation ou l'assemblage des données définissant chacun des caractères générés lors de la première étape, dans le but de pouvoir les transmettre à travers le réseau. Cette étape de préparation est effectuée sur le poste serveur, comme cela est décrit ci-dessous.
Après avoir concaténé la matrice de chaque caractère, comme nous venons de le décrire, le résultat de la concaténation est ensuite stocké dans un fichier. Ce fichier peut contenir, de manière préférentielle, un ou plusieurs caractères concaténés. Dans le cas de plusieurs caractères concaténés, le contenu du fichier est décrit ci-après.
Le fichier est stocké de manière préférentielle sur des moyens de stockage que comprend le serveur, ces moyens de stockage pouvant être un disque dur. L'avantage de stocker le fichier sur le disque dur permet d'éviter de régénérer les informations de concaténation pour une famille de polices donnée pour une taille donnée et un style donné à chaque fois que des éléments textuels sont affichés sur un poste client selon une telle famille de police de caractères pour une telle taille et pour un tel style. Le fichier comprend les informations nécessaires concernant chaque caractère. Il comporte des informations globales sur la police, telles que la hauteur maximale des caractères, la position de la ligne de base qui correspond à une ligne horizontale sur laquelle s'alignent tous les caractères, la distance verticale maximale en points au-dessus de cette ligne de base ainsi que la distance verticale maximale en dessous de cette même ligne de base. D'autre part, le fichier comporte des informations d'encombrement horizontal de chacun des caractères, ainsi que les positions au sein du fichier pour chacune des matrices de chacun des caractères ainsi que l'ensemble de ces matrices concaténées lors de l'étape précédente ci-dessus décrite. Les informations d'encombrement horizontal pour un caractère donné sont, de préférence, indexées sur la valeur, selon le code ASCII (ou UTF8), du caractère. De même, la position de la matrice d'un caractère donné est indexée de la même manière dans le fichier comportant tous les caractères.

Enfin le fichier ainsi constitué est ensuite compressé en utilisant une méthode de compression standard de fichier, comme par exemple en utilisant la méthode de compression dite « ZIP ». Une telle compression de ce type de fichier est particulièrement efficace, puisqu'un taux de compression de 1:8 est typiquement obtenu. Le résultat final est donc, pour chaque famille de police, constitué de n fichiers très compacts, un fichier par taille et style donnés.

De manière préférentielle, tous les fichiers ainsi générés peuvent se retrouver sur les moyens de stockage du poste serveur. Il faut noter que seuls les fichiers contenant une famille, une taille et un style nécessaires sont générés. Cela permet de réduire au maximum la place occupée par ces fichiers sur les moyens de stockage du poste serveur.

Lors de la transmission au poste client d'éléments textuels à afficher, le fichier compressé est transmis avec ces éléments textuels si le poste client ne comporte pas dans son cache le dit fichier ou si le poste client comporte une version antérieure du dit fichier compressé.

Il est à noter qu'en aucun cas, la police source ne reste installée sur le poste client, dans le sens où elle ne devient pas utilisable pour un autre document. Cette caractéristique permet de ne pas violer les règles du droit d'auteurs des polices de caractères, à savoir que la plupart des polices permettent l'intégration à l'intérieur d'un document en mode prévisualisation, ce qui est le cas dans l'invention.

La troisième étape principale de l'invention est la génération des caractères sur le poste client. Cette génération se fera à partir des fichiers transmis par le poste serveur au poste client, les fichiers ayant été générés selon les étapes précédentes. Au moment où une chaîne de caractères doit être dessinée à l'écran selon une famille, une taille et un style donnés, le poste client charge si nécessaire à travers le réseau sur le poste serveur le fichier correspondant qui lui est alors transmis selon le protocole du réseau comme on va le décrire. Dans le cas d'un réseau internet, extranet ou intranet, le protocole peut être le protocole HTTP (HyperText Transfert Protocol ou protocole de transfert d'hypertexte). En pratique, le fichier de police n'est transmis qu'une seule fois au poste client. En effet, le poste client comprenant une mémoire cache, il existe une probabilité importante pour que le fichier de police considéré y soit déjà chargé lorsqu'une utilisation ultérieure de ce fichier est demandée. Lors de cette utilisation ultérieure, la décision de charger ou non le fichier à partir du poste serveur dépend principalement de la comparaison de la date du dernier chargement à la date de modification du fichier sur le poste serveur : si cette date de modification est plus récente, le fichier est rechargé, sinon le fichier du cache est utilisé.

Sur le poste client, une boucle ou une routine de dessin est implémentée. Cette boucle de dessin va permettre de dessiner sur les moyens d'affichage du poste client les différents caractères d'une chaîne de caractères à partir des informations contenues dans le fichier transmis. L'implémentation de la boucle de dessin est faite de préférence en langage JAVA, ceci afin de garantir un maximum de compatibilité avec les systèmes existants sur les différents postes clients. D'autre part, comme les matrices de caractères chargées sont en fait déjà organisées comme elles doivent être affichées à l'écran, l'utilisation d'un langage interprété comme un langage de type JAVA (par opposition à un langage compilé pour un processeur donné) est suffisamment rapide pour être transparent du point de vue de l'utilisateur.

La boucle de base de dessin est la suivante : elle comprend les données d'entrée suivantes :

la chaîne de caractères à dessiner ;
la position horizontale x et verticale y ; et
la couleur de dessin.

L'algorithme de la boucle est le suivant :

soit x = position horizontale du premier caractère
soit y = position verticale du premier caractère
soit dy = hauteur de la police

Pour chaque caractère c de la chaîne :

soit o = position dans le fichier depuis le début du fichier de la matrice de c
soit w = largeur du caractère c lu dans le fichier pour chaque i de 0 à dy
   pour chaque j de 0 à *PartieEntière*

$$\left(\frac{N+7}{8}\right) - 1$$

soit $B_{ij}$ = $j^{ème}$ octet de la $i^{ème}$ ligne du caractère c dans sa matrice
pour chaque bit b de $B_{ij}$ de 0 à 7 (de gauche à droite)

```
                si      Bij[b]      est      vrai,      alors
                pixel(x+j*8+b,x+i)=couleur
           b = b + 1
         j = j + 1
      i = i + 1
   x = x + w (déplacement à la position du caractère suivant dans la
   chaîne)
```

Il est à noter que, seuls, les bits non nuls sont considérés. Si un fond particulier est désiré, celui-ci doit être créé avant le dessin des caractères à proprement dit, que le fond soit uni ou que le fond soit constitué d'une image par exemple.

Cette boucle de base de dessin telle que décrite peut être augmentée afin de permettre un anti-aliasing. La valeur du point à désigner sera alors une fonction du point existant du fait de l'image de fond ou du fond uni déjà présent et de la couleur du texte proprement dite. La valeur finale attribuée au point est une fonction du nombre de ses voisins ayant une valeur vraie dans la matrice du caractère considéré. En prenant en compte les voisins immédiats du point, soit 8 voisins, la valeur attribuée est un barycentre entre la valeur d'origine et la valeur de la couleur désirée pour le texte. Le jeu des poids s'effectuant sur le nombre de voisins dont la valeur est vraie.

Il est aussi possible d'augmenter aussi la boucle de dessin telle que décrite précédemment afin de pouvoir afficher le texte dans une orientation angulaire arbitraire. La procédure consiste alors simplement à ne plus considérer la valeur de la ligne de base comme constante mais fonction d'une courbe donnée. Pour chaque pixel désigné, la ligne de base est réajustée en fonction de sa position dans la matrice. Son déplacement est dans le cas général bien représenté par une courbe de type spline, mais peut se simplifier par une routine d'approximation linéaire si une rotation est suffisante, par une simple addition par un angle multiple de 45°, et une constante pour une direction verticale.

## Revendications

**1.**   Procédé d'affichage sur un poste client (11,12,13) d'un document transmis par un poste serveur (1,2) et comportant des éléments textuels, **caractérisé en ce qu'**il comprend les étapes suivantes :

-   mémoriser dans le poste serveur un fichier de police source comprenant une cartographie binaire d'un ensemble prédéterminé de caractères aptes à constituer les éléments textuels,
-   au niveau du poste serveur, préparer le document contenant les éléments textuels, l'aspect des éléments textuels dans le document étant obtenu par des références aux caractères correspondants dans le fichier de police source,
-   transmettre au poste client le document,
-   mémoriser dans le poste client un fichier de police local identique au fichier de police source, et
-   au niveau du poste client, utiliser les références en combinaison avec le fichier de police local pour reconstituer fidèlement l'aspect des éléments textuels.

**2.** Procédé selon la revendication 1, **caractérisé en ce que** l'étape de mémorisation dans le poste client d'un fichier de police local, comporte des sous-étapes suivantes si le fichier de police local n'est pas présent sur le poste client :

- requête par le poste client d'une copie du fichier de police source au poste serveur ;
- transmission par le poste serveur au poste client d'une copie du fichier de police source ; et,
- réception par le poste client de la copie du fichier de police source comme fichier de police locale

**3.** Procédé selon la revendication 1 ou 2, **caractérisé en ce que** le fichier de police source, une fois constitué, est compressé en vue de sa transmission.

**4.** Procédé selon l'une des revendications 1 à 3, **caractérisé en ce que** le fichier de police source est créé par des étapes suivantes :

- appel du dessin du caractère engendré par un système d'exploitation du poste serveur ;
- dessin du caractère dans une mémoire organisée de manière bidimensionnelle du poste serveur ;
- lecture dans la mémoire bidimensionnelle de chaque point du dessin du caractère formant la cartographie binaire du caractère ;
- concaténation des valeurs de chaque point du dessin dans une mémoire tampon du poste serveur ; et,
- mémorisation des concaténations à partir de la mémoire tampon dans le fichier de police source.

**5.** Procédé selon la revendication 4, **caractérisé en ce que**, préalablement à l'appel du dessin du caractère, on effectue une mise à zéro de la mémoire bidimensionnelle dans lequel on va dessiner le caractère.

**6.** Procédé selon la revendication 4 ou 5, **caractérisé en ce qu'**il présente une étape préliminaire d'allocation d'une mémoire organisée de manière bidimensionnelle pour représenter tous les caractères de la police de caractères.

**7.** Procédé selon l'une des revendications 1 à 6, **caractérisé en ce que**, lors de l'utilisation des références en combinaison avec le fichier de police local pour reconstituer fidèlement l'aspect des éléments textuels :

- pour chaque caractère à afficher des éléments textuels, on lit dans le fichier de police local la cartographie binaire du caractère donnant les valeurs des points du caractère ;
- on dessine sur des moyens d'affichage du poste client le caractère à partir des valeurs des points lus dans le fichier de police local.

**8.** Procédé selon l'une des revendications 1 à 9, **caractérisé en ce que**, le document comprend une routine apte à mettre en oeuvre l'étape d'utilisation des références en combinaison avec le fichier de police local pour reconstituer fidèlement l'aspect des éléments textuels.

**9.** Procédé de génération sur un poste serveur (1,2) d'un document apte à être transmis et comportant des éléments textuels, **caractérisé en ce qu'**il comprend les étapes suivantes :

- mémoriser dans le poste serveur un fichier de police source comprenant une cartographie binaire d'un ensemble prédéterminé de caractères aptes à constituer les éléments textuels,
- préparer le document contenant les éléments textuels, l'aspect des éléments textuels dans le document étant obtenu par des références aux caractères correspondants dans le fichier de police source,
- transmettre à un poste client le document, et
- mettre à disposition le fichier de police source.

**10.** Procédé selon la revendication 9, **caractérisé en ce que** le fichier de police source, une fois constitué, est compressé en vue de sa transmission.

**11.** Procédé selon la revendication 9 ou 10, **caractérisé en ce que** le fichier de police source est créé par des étapes suivantes :

- appel du dessin du caractère engendré par un système d'exploitation du poste serveur ;
- dessin du caractère dans une mémoire organisée de manière bidimensionnelle du poste serveur ;
- lecture dans la mémoire bidimensionnelle de chaque point du dessin du caractère formant la cartographie binaire du caractère ;

- concaténation des valeurs de chaque point du dessin dans une mémoire tampon du poste serveur ; et,
- mémorisation des concaténations à partir de la mémoire tampon dans le fichier de police source.

**12.** Procédé selon la revendication 11, **caractérisé en ce que**, préalablement à l'appel du dessin du caractère, on effectue une mise à zéro de la mémoire bidimensionnelle dans lequel on va dessiner le caractère.

**13.** Procédé selon la revendication 11 ou 12, **caractérisé en ce qu'**il présente une étape préliminaire d'allocation d'une mémoire organisée de manière bidimensionnelle pour représenter tous les caractères de la police de caractères.

**14.** Procédé d'affichage sur un poste client (11,12,13) d'un document transmis par un poste serveur (1,2) et comportant des éléments textuels, **caractérisé en ce qu'**il comprend les étapes suivantes :

- réception du document transmis,
- mémoriser dans le poste client un fichier de police local identique au fichier de police source, et
- utiliser les références en combinaison avec le fichier de police local pour reconstituer fidèlement l'aspect des éléments textuels.

**15.** Procédé selon la revendication 14, **caractérisé en ce que** l'étape de mémorisation dans le poste client d'un fichier de police local, comporte des sous-étapes suivantes si le fichier de police local n'est pas présent sur le poste client :

- Requête par le poste client d'une copie du fichier de police source au poste serveur ;
- transmission par le poste serveur au poste client d'une copie du fichier de police source ; et,
- réception par le poste client de la copie du fichier de police source comme fichier de police local.

**16.** Procédé selon la revendication 14 ou 15, **caractérisé en ce que**, lors de l'utilisation des références en combinaison avec le fichier de police local pour reconstituer fidèlement l'aspect des éléments textuels :

- pour chaque caractère à afficher des éléments textuels, on lit dans le fichier de police local la cartographie binaire du caractère donnant les valeurs des points du caractère ;
- on dessine sur des moyens d'affichage du poste client le caractère à partir des valeurs des points lus dans le fichier de police local.

**17.** Procédé selon l'une des revendications 14 à 16, **caractérisé en ce que**, le document comprend une routine apte à mettre en oeuvre l'étape d'utilisation des références en combinaison avec le fichier de police local pour reconstituer fidèlement l'aspect des éléments textuels.

**18.** Réseau d'ordinateurs comportant au moins un poste serveur et au moins un poste client, **caractérisé en ce qu'**il comporte des moyens aptes à mettre en oeuvre le procédé selon l'une des revendications 1 à 8.

**19.** Poste serveur connecté à un réseau d'ordinateurs **caractérisé en ce qu'**il comporte des moyens aptes à mettre en oeuvre le procédé selon l'une des revendications 9 à 13.

**20.** Poste client connecté à un réseau d'ordinateurs **caractérisé en ce qu'**il comporte des moyens aptes à mettre en oeuvre le procédé selon l'une des revendications 14 à 17.

FIG.1

FIG.2

Office européen
des brevets

**RAPPORT DE RECHERCHE EUROPEENNE**

Numéro de la demande

EP 01 40 1177

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 6 073 147 A (CHAN ALLEN M ET AL) 6 juin 2000 (2000-06-06) | 1,2,4-9, 11-20 | G06F17/21 |
| Y | * colonne 2, ligne 5 - colonne 5, ligne 67; figures 1-4 * | 3,10 | |
| X | US 5 781 714 A (COLLINS JOHN S ET AL) 14 juillet 1998 (1998-07-14) * abrégé * | 1,9,14 | |
| X | PATENT ABSTRACTS OF JAPAN vol. 2000, no. 13, 5 février 2001 (2001-02-05) & JP 2000 285055 A (BROTHER IND LTD), 13 octobre 2000 (2000-10-13) * abrégé * | 1,9,14 | |
| Y | US 5 524 182 A (CHARI RANGARAJAN T ET AL) 4 juin 1996 (1996-06-04) * colonne 19, ligne 51 - colonne 20, ligne 13; figure 7 * | 3,10 | |
| A | US 5 528 742 A (WEISE DAVID N ET AL) 18 juin 1996 (1996-06-18) * colonne 2, ligne 61 - colonne 3, ligne 14 * | 1,9,14 | **DOMAINES TECHNIQUES RECHERCHES (Int.Cl.7)**<br><br>G06F |

Le présent rapport a été établi pour toutes les revendications

| Lieu de la recherche | Date d'achèvement de la recherche | Examinateur |
|---|---|---|
| BERLIN | 11 octobre 2001 | Deane, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**  EP 01 40 1177

La présente annexe indique les membres de la famille de brevets relatifs aux documents brevets cités dans le rapport de
recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

11-10-2001

| Document brevet cité au rapport de recherche | | Date de publication | Membre(s) de la famille de brevet(s) | | Date de publication |
|---|---|---|---|---|---|
| US 6073147 | A | 06-06-2000 | AUCUN | | |
| US 5781714 | A | 14-07-1998 | US | 5583978 A | 10-12-1996 |
| | | | AU | 7364196 A | 01-04-1997 |
| | | | CA | 2208523 A1 | 20-03-1997 |
| | | | GB | 2313943 A ,B | 10-12-1997 |
| | | | WO | 9710555 A1 | 20-03-1997 |
| | | | AU | 2659695 A | 21-12-1995 |
| | | | CA | 2191332 A1 | 07-12-1995 |
| | | | GB | 2302784 A ,B | 29-01-1997 |
| | | | JP | 10500233 T | 06-01-1998 |
| | | | WO | 9533247 A1 | 07-12-1995 |
| | | | US | 5577177 A | 19-11-1996 |
| JP 2000285055 | A | 13-10-2000 | AUCUN | | |
| US 5524182 | A | 04-06-1996 | JP | 8248940 A | 27-09-1996 |
| US 5528742 | A | 18-06-1996 | AUCUN | | |

EPO FORM P0460

Pour tout renseignement concernant cette annexe : voir Journal Officiel de l'Office européen des brevets, No.12/82